# EUROPEAN PATENT APPLICATION

(11) **EP 4 646 977 A1**
(43) Date of publication of application: **12.11.2025**
(21) Application number: 25165502.3
(22) Date of filing: 24.03.2025
(51) Int. Cl.: A47D 9/00, A47D 13/02

(54) **BABY SLEEPING BASKET**

(30) Priority: 06.05.2024 CN 202410545757
(71) Applicant: Kunshan Vigorkids Child Products Co. Ltd., Suzhou, Jiangsu 215300 (CN)
(72) Inventor: TANG, Weihong, Suzhou, Jiangsu 215300 (CN)
(74) Representative: Sun, Yiming

(57) **Abstract**

The present invention discloses a baby sleeping basket, wherein a sleeping basket frame includes a two-section upper surrounding frame assembly (1) which is able to be folded upward, a two-section lower surrounding frame assembly (2) which is located below the upper surrounding frame assembly and is able to be folded upward, two-section V-shaped supporting frame assemblies (3) which are rotatingly installed between the upper surrounding frame assembly and the lower surrounding frame assembly, and are able to be folded and drive the lower surrounding frame assembly to fold upward or unfold as the upper surrounding frame assembly is folded upward or unfolded, and mounting bases (4) installed on the lower surrounding frame assembly for detachable assembly with other baby equipment; and locking mechanisms (5) are arranged at folding joints of the upper surrounding frame assembly to lock the upper surrounding frame assembly in the unfolded state. The overall structure of the present invention is simple and novel, and the invention can not only realize the folding in the longitudinal direction of the sleeping basket, but also realize the folding in the length direction of the sleeping basket, so that the folded baby sleeping basket has a smaller volume and is more convenient to carry and store.

## Description

### TECHNICAL FIELD

The present invention relates to a baby sleeping basket.

### BACKGROUND

The conventional baby sleeping basket includes a sleeping basket frame, a cloth cover wrapped around the sleeping basket frame, and a handle installed at an upper frame of the sleeping basket frame. For easy assembly and disassembly between the baby sleeping basket and baby equipment (such as a stroller frame), the conventional baby sleeping basket is often detachably mounted by plugging mounting bases provided on the baby sleeping basket into the fixing bases on the baby equipment (such as a stroller frame).

For convenient carrying and transportation, the baby sleeping basket is usually designed to be foldable. However, in the prior art, the foldable baby sleeping basket has a complex structure, and the folding and unfolding operations are cumbersome, making the baby sleeping basket inconvenient to use. In addition, most existing baby sleeping baskets are folded up and down, so the length cannot be shortened. Therefore, the folded sleeping basket still occupies a relatively large space, which is unfavorable for carrying and storage.

### SUMMARY

An object of the present invention is to provide a baby sleeping basket that is novel in structure, convenient to operate and is compact in structure and small in volume when folded.

The technical solution of the present invention is: a baby sleeping basket includes a sleeping basket frame with an unfolded state and a folded state, and a handle arranged on the sleeping basket frame, wherein the sleeping basket frame includes a two-section upper surrounding frame assembly which is able to be folded upward, a two-section lower surrounding frame assembly which is located below the upper surrounding frame assembly and is able to be folded upward, two-section V-shaped supporting frame assemblies which are rotatingly installed between the upper surrounding frame assembly and the lower surrounding frame assembly, and are able to be folded and drive the lower surrounding frame assembly to fold upward or unfold as the upper surrounding frame assembly is folded upward or unfolded, and mounting bases installed on the lower surrounding frame assembly for detachable assembly with other baby equipment; and locking mechanisms are arranged at folding joints of the upper surrounding frame assembly to lock the upper surrounding frame assembly in the unfolded state.

When the baby sleeping basket is unfolded, the upper surrounding frame assembly and the lower surrounding frame assembly are unfolded and in a flat state, the supporting frame assemblies are unfolded in a V-shape and supported between the upper surrounding frame assembly and the lower surrounding frame assembly, at the moment, the locking mechanisms perform unfolded locking on the upper surrounding frame assembly, thereby maintaining the entire baby sleeping basket in the unfolded state; and
when the baby sleeping basket is folded, locking by the locking mechanisms is released, the upper surrounding frame assembly is folded upward and the lower surrounding frame assembly is folded upward under the linkage action of the supporting frame assemblies to complete the folding of the entire baby sleeping basket.

As a preferred technical solution of the present application, the upper surrounding frame assembly includes a first upper frame and a second upper frame that are correspondingly arranged on the left and right sides and rotatingly connected, and the locking mechanisms are arranged at rotating connections between the first upper frame and the second upper frame.

The lower surrounding frame assembly includes a first lower frame and a second lower frame that are correspondingly arranged on the left and right sides and rotatingly connected, the mounting base is arranged at a rotating connection between the first upper frame and the second upper frame, and all three are coaxially connected.

The supporting frame assembly includes a first supporting frame and a second supporting frame that are correspondingly arranged on the left and right sides with lower ends rotatingly connected, an upper end of the first supporting frame is rotatingly connected with the first upper frame, and a lower portion is rotatingly connected with the first lower frame, an upper end of the second supporting frame is rotatingly connected with the second upper frame, and a lower portion is rotatingly connected with the second lower frame.

Wherein, the first upper frame and the second upper frame are U-shaped with openings facing each other; and the first lower frame and the second lower frame are also U-shaped with openings facing each other.

As a preferred technical solution of the present application, an unlocking assembly for releasing the locking of the locking mechanisms is arranged on an outer end of the first upper frame or the second upper frame.

As a preferred technical solution of the present application, the locking mechanism includes a first tooth groove formed on an inner end of the first upper frame, a second tooth groove formed on an inner end of the second upper frame and corresponding to the first tooth groove, a gear arranged between the first tooth groove and the second tooth groove and capable of simultaneously locking the first tooth groove and the second tooth groove, an unlocking block arranged between the gear and the first tooth groove and capable of moving radially, and a linkage arranged between the unlocking block and the gear, the linkage cooperates with the unlocking block via inclined surfaces, the unlocking block is connected with the unlocking assembly via a traction cable; during unlocking, the unlocking assembly drives the unlocking block to move radially and, through the cooperation of the inclined surfaces, drives the linkage to move axially, thereby pushing the gear out of the first tooth groove and fully into the second tooth groove to achieve unlocking.

As a preferred technical solution of the present application, the linkage is provided with oblique convex teeth extending axially in the direction of the unlocking block, and a side of the unlocking block is provided with guiding portions that cooperate with the inclined surfaces of the oblique convex teeth, so that when the unlocking assembly drives the unlocking block to move radially, the guiding portions drive the linkage to move axially by cooperating with the inclined surfaces of the oblique convex teeth. Wherein, the linkage is provided with a protrusion extending axially in the direction of the gear, and a side of the gear corresponding to the protrusion is formed with a retaining groove for the protrusion to abut against and move. The cooperation of the retaining groove and the protrusion can prevent the linkage from rotating relative to the unlocking block when the linkage is jacked up by the unlocking block (when the linkage is axially moved to the farthest position relative to the unlocking block and the two are about to be disengaged).

Compared with the prior art, the present application has the following advantages:
1. The upper surrounding frame assembly and the lower surrounding frame assembly in this invention both adopt a two-section structure that can be folded upward. When the upper surrounding frame assembly is folded upward or unfolded, the two-section V-shaped supporting frame assemblies between them drive the lower surrounding frame assembly to fold upward or unfold accordingly. The overall structure is simple yet novel, enabling not only the folding of the baby sleeping basket in the vertical direction but also the folding of the baby sleeping basket in the length direction, thus reducing the volume of the folded baby sleeping basket and making it more convenient to carry and store.
2. The locking mechanisms of this invention are installed at the rotating connections of the upper surrounding frame assembly, and the unlocking assembly for releasing the locking of the locking mechanisms is arranged on an end of the upper surrounding frame assembly. Therefore, when folding the baby sleeping basket, one-handed one-click unlocking can be achieved without bending over, making the operation very convenient.

### BRIEF DESCRIPTION OF THE DRAWINGS

In order to illustrate the technical solutions of the embodiments of the present invention more clearly, the accompanying drawings required for use in the description of the embodiments will be briefly described below. The accompanying drawings in the following description are only some embodiments of the present invention, and other drawings can be obtained from these drawings for those of ordinary skill in the art without paying inventive step.

The structures, proportions, sizes, and the like illustrated in drawings in this specification are only for the purpose of complementing the content disclosed in the specification and facilitating understanding and reading by those skilled in the art, not for limiting the implementable conditions of the present invention, therefore, there is no technical significance, and any structural modification, proportionality change, or adjustment of the dimensions, without affecting the performance or the objectives of the present invention, should still fall within the scope of the technical content disclosed by the invention.
FIG. 1 is a schematic diagram of the three-dimensional structure of the invention when it is in an unfolded state;
FIG. 2 is a schematic diagram of the side structure of the invention when it is in an unfolded state;
FIG. 3 is a schematic diagram of the three-dimensional structure of the invention when it is in a folding process;
FIG. 4 is a schematic diagram of the side structure of the invention when it is in a folding process;
FIG. 5 is a schematic diagram of the three-dimensional structure of the invention when it is in a folded state;
FIG. 6 is a schematic diagram of the side structure of the invention when it is in a folded state;
FIG. 7 is a schematic diagram of an assembly structure of the locking mechanism in the invention; and
FIG. 8 is a schematic diagram of an assembly structure of the locking mechanism in the invention from another angle.

Wherein: 1 upper surrounding frame assembly; 101 first upper frame; 102 second upper frame;
2 lower surrounding frame assembly; 201 first lower frame; 202 second lower frame;
3 supporting frame assembly; 301 first supporting frame; 302 second supporting frame;
4 mounting base;
5 locking mechanism; 501 first tooth groove; 502 second tooth groove; 503 gear; 5031 retaining groove; 504 unlocking block; 5041 guiding portion; 505 linkage; 5051 oblique convex teeth; 5052 protrusion;
6 unlocking assembly; and
7 traction cable.

### DETAILED DESCRIPTION

In order to make the objectives, technical solutions and advantages of the present application more clear, the technical solutions of the embodiments of the present application will be clearly and completely described below in conjunction with the accompanying drawings of the embodiments of the present application. Apparently, the described embodiments are a part of the embodiments of the present application, but not all of the embodiments. Based on the described embodiments of the present application, all other embodiments obtained by those of ordinary skill in the art without creative effort, belong to the scope of protection of the present application. It is understood that some technical measures of the various embodiments described herein may be substituted or combined with each other without conflict.

In the description of the present specification and claims, if the terms "first", "second", etc., are present, they are only used to distinguish the described objects and do not have any sequential or technical meaning. Thus, an object defined as "first", "second", etc. may explicitly or implicitly include one or more of the objects. Further, words such as "a" or "an" do not indicate a limitation of the number, but rather indicate that at least one is present, and "a plurality" indicates not less than two.

In the description of the present specification and claims, if there are terms such as "connection", "mounting", "fixing", "contained", etc., they should be understood broadly unless otherwise specified. For example, "connection" may be separate connection or integrated connection, may be direct connection or indirect connection through an intermediate medium, and may be non-detachable connection or detachable connection. As another example, "contained" does not necessarily mean that the whole is completely contained, and the concept also includes a partially contained case where a portion protrudes externally. For those of ordinary skilled in the art, the specific meanings of the above terms in the present application may be understood according to specific situations.

In the description of the present specification and claims, if the terms "upper", "lower", "horizontal" and the like are present, the orientation or positional relationship indicated is based on the orientation or positional relationship shown in the drawings, and is merely intended to facilitate describing the present application and simplifying the description, rather than to indicate or imply that the referred element has to be located in a specific direction or constructed and operated in the specific direction, these directional terms are relative concepts for purposes of description and clarity relative thereto, which may vary accordingly in accordance with changes in the orientation in which the components are placed in the drawings. For example, if the device in the figures is turned over, elements described as "below" other elements would then be positioned "above" the other elements.

In the description of the present specification and the claims, the term "if" is generally interchangeable with "when" or "upon" or "in response to determining" or "in response to detecting", depending on the context.

In the description of the present specification and claims, when it comes to the term "in the direction of" with respect to a motion, including a motion with a directional component, the term "in the direction of" is not necessarily understood to mean a motion in only one direction, and those skilled in the art can understand the specific meaning of the aforementioned term in the present application according to specific circumstances.

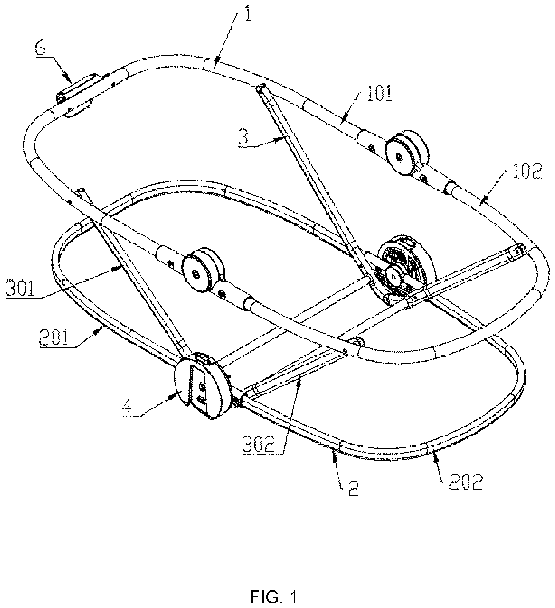

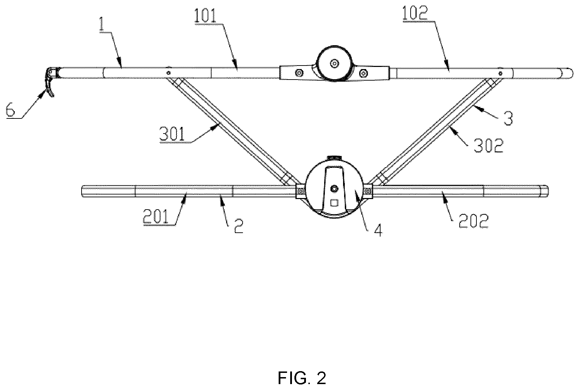

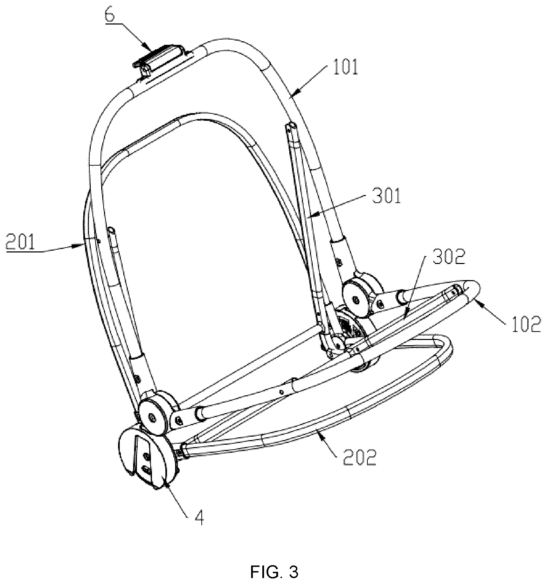

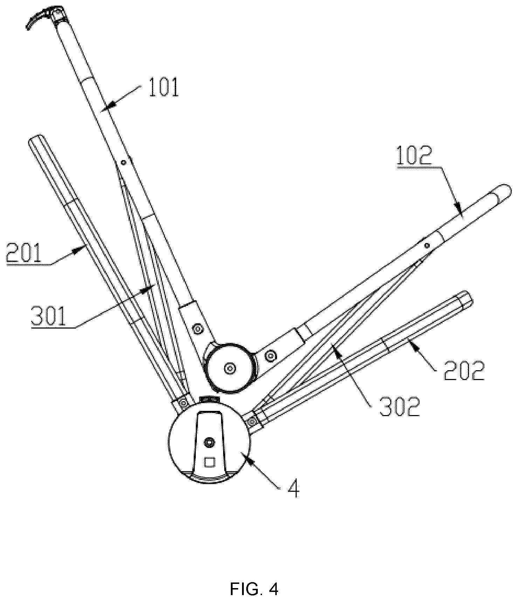

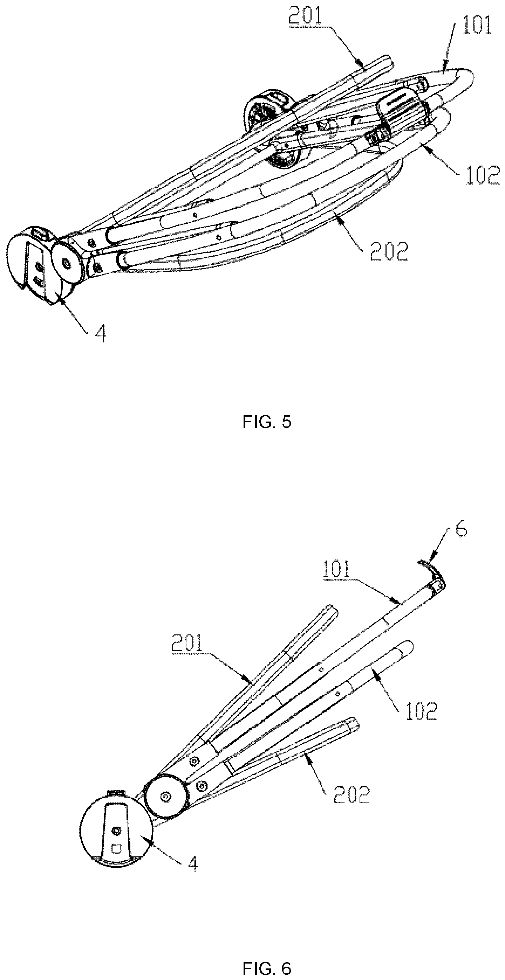

As shown in FIGS. 1 to 8, a baby sleeping basket includes a sleeping basket frame with an unfolded state and a folded state, and a handle arranged on the sleeping basket frame, wherein the sleeping basket frame includes a two-section upper surrounding frame assembly 1 which is able to be folded upward, a two-section lower surrounding frame assembly 2 which is located below the upper surrounding frame assembly 1 and is able to be folded upward, two-section V-shaped supporting frame assemblies 3 which are rotatingly installed between the upper surrounding frame assembly 1 and the lower surrounding frame assembly 2, and are able to be folded and drive the lower surrounding frame assembly 2 to fold upward and or unfold as the upper surrounding frame assembly 1 is folded upward or unfolded, and mounting bases 4 for detachable assembly with other baby equipment (such as a stroller frame).

The upper surrounding frame assembly 1 includes a first upper frame 101 and a second upper frame 102 that are correspondingly arranged on the left and right sides and rotatingly connected, and locking mechanisms 5 for unfolding locking of the first upper frame 101 and the second upper frame 102 are provided at the rotating connections of the first upper frame 101 and the second upper frame 102. Wherein, the first upper frame 101 and the second upper frame 102 are U-shaped with openings facing each other so as to constitute a conventional rectangular upper surrounding frame assembly 1.

The lower surrounding frame assembly 2 includes a first lower frame 201 and a second lower frame 202 that are correspondingly arranged on the left and right sides and rotatingly connected, the mounting base 4 is arranged at a rotating connection between the first upper frame 201 and the second upper frame 202, and all three are coaxially connected. The design allows the sleeping basket to be folded without being detached from other baby equipment (such as a stroller frame). Wherein, the first lower frame 201 and the second lower frame 202 are U-shaped with openings facing each other so as to constitute a conventional rectangular lower surrounding frame assembly 2.

The supporting frame assembly 3 includes a first supporting frame 301 and a second supporting frame 302 that are correspondingly arranged on the left and right sides with lower ends rotatingly connected, an upper end of the first supporting frame 301 is rotatingly connected with the first upper frame 101, and a lower portion is rotatingly connected with the first lower frame 201, an upper end of the second supporting frame 302 is rotatingly connected with the second upper frame 102, and a lower portion is rotatingly connected with the second lower frame 202.

Wherein, a rotation point of the lower ends of the first supporting frame 301 and the second supporting frame 302 is located below a rotation point among the mounting base 4, the first lower frame 201 and the second lower frame 202. A rotation point between the first supporting frame 301 and the first lower frame 201 and a rotation point between the second supporting frame 302 and the second lower frame 202 are located on the left and right sides of the rotation point among the mounting base 4, the first lower frame 201 and the second lower frame 202.

In the present embodiment, an unlocking assembly 6 for releasing the locking of the locking mechanisms 5 is arranged on an outer end of the first upper frame 101 or the second upper frame 102.

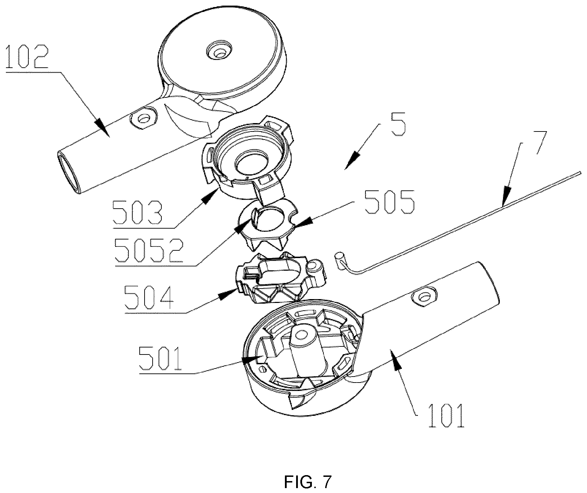

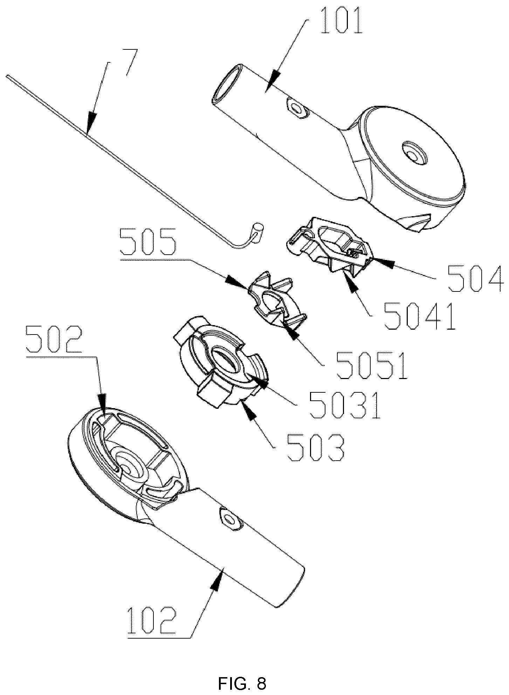

In this embodiment, as shown in FIGS. 7 and 8, the locking mechanism 5 includes a first tooth groove 501 formed on an inner end of the first upper frame 101, a second tooth groove 502 formed on an inner end of the second upper frame 102 and corresponding to the first tooth groove 501, a gear 503 arranged between the first tooth groove 501 and the second tooth groove 502 and capable of simultaneously locking the first tooth groove 501 and the second tooth groove 502, an unlocking block 504 arranged between the gear 503 and the first tooth groove 501 and capable of moving radially, and a linkage 505 arranged between the unlocking block 504 and the gear 503, the linkage 505 cooperates with the unlocking block 504 via inclined surfaces, the unlocking block 504 is connected with the unlocking assembly 6 via a traction cable 7; during unlocking, the unlocking assembly 6 drives the unlocking block 504 to move radially and, through the cooperation of the inclined surfaces, drives the linkage 505 to move axially, thereby pushing the gear 503 out of the first tooth groove 501 and fully into the second tooth groove 502 to achieve unlocking. Since there are many types of locking mechanisms between two rotating parts in the art, they are not particularly limited here, and the above description is merely illustrative of a specific embodiment of one locking mechanism, and the structure of the remaining locking mechanisms is not described in detail.

In the present embodiment, the linkage 505 is provided with oblique convex teeth 5051 extending axially in the direction of the unlocking block 504, and a side of the unlocking block 504 is provided with guiding portions 5041 that cooperate with the inclined surfaces of the oblique convex teeth 5051, so that when the unlocking assembly 6 drives the unlocking block 504 to move radially, the guiding portions 5041 drive the linkage 505 to move axially direction by cooperating with the inclined surfaces of the oblique convex teeth 5051. Wherein, the linkage 505 is provided with a protrusion 5052 extending axially in the direction of the gear 503, and a side of the gear 503 corresponding to the protrusion 5052 is formed with a retaining groove 5031 for the protrusion 5052 to abut against and move. The cooperation of the retaining groove 5031 and the protrusion 5052 can prevent the linkage 505 from rotating relative to the unlocking block 504 when the linkage 505 is jacked up by the unlocking block 504 (when the linkage 505 is axially moved to the farthest position relative to the unlocking block 504 and the two are about to be disengaged).

The working principle of the present invention is:
when the baby sleeping basket is unfolded, the upper surrounding frame assembly 1 and the lower surrounding frame assembly 2 are unfolded and in a flat state, the supporting frame assemblies 3 are unfolded in a V-shape and supported between the upper surrounding frame assembly 1 and the lower surrounding frame assembly 2, at the moment, the locking mechanisms 5 perform unfolded locking on the upper surrounding frame assembly 1, thereby maintaining the entire baby sleeping basket in the unfolded state.

When the baby sleeping basket is folded, locking by the locking mechanisms 5 is released by the unlocking assembly 6, the upper surrounding frame assembly 1 is folded upward and the lower surrounding frame assembly 2 is folded upward under the linkage action of the first supporting frames 301 and the second supporting frames 302 to complete the folding of the entire baby sleeping basket.

The upper surrounding frame assembly 1 and the lower surrounding frame assembly 2 in this invention both adopt a two-section structure that can be folded upward. When the upper surrounding frame assembly 1 is folded upward or unfolded, the two-section V-shaped supporting frame assemblies 3 between them drive the lower surrounding frame assembly 2 to fold upward or unfold accordingly. The overall structure is simple yet novel, enabling not only the folding of the baby sleeping basket in the vertical direction but also the folding of the baby sleeping basket in the length direction, thus reducing the volume of the folded baby sleeping basket and making it more convenient to carry and store.

The locking mechanisms of this invention are installed at the rotating connections of the upper surrounding frame assembly 1, and the unlocking assembly 6 for releasing the locking of the locking mechanisms 5 is arranged on an end of the upper surrounding frame assembly 1. Therefore, when folding the baby sleeping basket, one-handed one-click unlocking can be achieved without bending over, making the operation very convenient.

As a preferred embodiment of the present invention, in the description of the present specification, a description with reference to the terms "preferred", "optional", or the like means that a specific feature, structure, material, or characteristic described in connection with the embodiment or example is included in at least one embodiment or example of the present invention. In the present specification, schematic expressions of the above terms do not necessarily refer to the same embodiments or examples. Moreover, the specific features, structures, materials, or features described may be combined in a suitable manner in any one or more embodiments or examples.

The above embodiments are only used to illustrate detailed embodiments of the present invention, the present invention is not limited to the above detailed embodiments, i.e., it is not meant that the present invention must be implemented depending on the above detailed embodiments. It will be apparent to those skilled in the art that any modifications to the present invention, equivalent substitutions to the various materials of the products of the present invention, addition of auxiliary ingredients, selection of specific modes, and the like, fall within the scope and disclosure of the present invention.

## Claims

1. A baby sleeping basket, comprising a sleeping basket frame with an unfolded state and a folded state, and a handle arranged on the sleeping basket frame, **characterized in that** the sleeping basket frame comprises a two-section upper surrounding frame assembly which is able to be folded upward, a two-section lower surrounding frame assembly which is located below the upper surrounding frame assembly and is able to be folded upward, two-section V-shaped supporting frame assemblies which are rotatingly installed between the upper surrounding frame assembly and the lower surrounding frame assembly, and are able to be folded and drive the lower surrounding frame assembly to fold upward or unfold as the upper surrounding frame assembly is folded upward or unfolded, and mounting bases installed on the lower surrounding frame assembly for detachable assembly with other baby equipment; and locking mechanisms are arranged at folding joints of the upper surrounding frame assembly to lock the upper surrounding frame assembly in the unfolded state.

2. The baby sleeping basket according to claim 1, **characterized in that** the upper surrounding frame assembly comprises a first upper frame and a second upper frame that are correspondingly arranged on the left and right sides and rotatingly connected, and the locking mechanisms are arranged at rotating connections between the first upper frame and the second upper frame.

3. The baby sleeping basket according to claim 2, **characterized in that** the lower surrounding frame assembly comprises a first lower frame and a second lower frame that are correspondingly arranged on the left and right sides and rotatingly connected, the mounting base is arranged at a rotating connection between the first upper frame and the second upper frame, and all three are coaxially connected.

4. The baby sleeping basket according to claim 3, **characterized in that** the supporting frame assembly comprises a first supporting frame and a second supporting frame that are correspondingly arranged on the left and right sides with lower ends rotatingly connected, an upper end of the first supporting frame is rotatingly connected with the first upper frame, and a lower portion is rotatingly connected with the first lower frame, an upper end of the second supporting frame is rotatingly connected with the second upper frame, and a lower portion is rotatingly connected with the second lower frame.

5. The baby sleeping basket according to claim 3, **characterized in that** the first upper frame and the second upper frame are U-shaped with openings facing each other; and the first lower frame and the second lower frame are also U-shaped with openings facing each other.

6. The baby sleeping basket according to claim 3, **characterized in that** an unlocking assembly for releasing the locking of the locking mechanisms is arranged on an outer end of the first upper frame or the second upper frame.

7. The baby sleeping basket according to claim 6, **characterized in that** the locking mechanism comprises a first tooth groove formed on an inner end of the first upper frame, a second tooth groove formed on an inner end of the second upper frame and corresponding to the first tooth groove, a gear arranged between the first tooth groove and the second tooth groove and capable of simultaneously locking the first tooth groove and the second tooth groove, an unlocking block arranged between the gear and the first tooth groove and capable of moving radially, and a linkage arranged between the unlocking block and the gear, the linkage cooperates with the unlocking block via inclined surfaces, the unlocking block is connected with the unlocking assembly via a traction cable; during unlocking, the unlocking assembly drives the unlocking block to move radially and, through the cooperation of the inclined surfaces, drives the linkage to move axially, thereby pushing the gear out of the first tooth groove and fully into the second tooth groove to achieve unlocking.

8. The baby sleeping basket according to claim 7, **characterized in that** the linkage is provided with oblique convex teeth extending axially in the direction of the unlocking block, and a side of the unlocking block is provided with guiding portions that cooperate with the inclined surfaces of the oblique convex teeth.

9. The baby sleeping basket according to claim 7, **characterized in that** the linkage is provided with a protrusion extending axially in the direction of the gear, and a side of the gear corresponding to the protrusion is formed with a retaining groove for the protrusion to abut against and move.
